**Europäisches Patentamt**

**European Patent Office**

**Office européen des brevets**

(19)

(11) **EP 1 705 848 A1**

(12) **EUROPEAN PATENT APPLICATION**

(43) Date of publication:
27.09.2006 Bulletin 2006/39

(51) Int Cl.:
**H04L 12/56** (2006.01)

(21) Application number: 06251295.9

(22) Date of filing: 10.03.2006

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Winzer, Peter, J.**<br>**Aberdeen,**<br>**NJ 07747 (US)** |
| (30) Priority: **23.03.2005 US 86555** | (74) Representative: **Cockayne, Gillian et al**<br>**Lucent Technologies EUR-IP UK Ltd**<br>**Unit 18, Core 3**<br>**Workzone** |
| (71) Applicant: **LUCENT TECHNOLOGIES INC.**<br>**Murray Hill, New Jersey 07974-0636 (US)** | **Innova Business Park**<br>**Electric Avenue**<br>**Enfield,** |
| (72) Inventors:<br>• **Shepherd, Frederick Bruce**<br>**Summit,**<br>**NJ 07901 (US)** | **EN3 7XU (GB)** |

(54) **Methods and devices for routing traffic using randomized load balancing**

(57)    Randomized load balancing across a selected subset of routing nodes is shown to achieve near-optimal usage of network resources, yet alleviates "single point of failure" problems associated with existing hub routing techniques.

# FIG. 3

EP 1 705 848 A1

**Description**

## BACKGROUND OF THE INVENTION

Emerging data communication services increasingly create uncertainties and dynamism in the distribution of traffic across carrier networks. Two examples of such services are virtual private networks (VPNs) and remote storage computing applications. For network design purposes, such services are best modeled by the *hose model,* which treats node ingress/egress capacities as known constants, but does not specify point-to-point demands. For example, a service level agreement (SLA) for a VPN customer who wants to interconnect several business sites via a carrier network might just specify the peak rates at each ingress node, but leave open the question of how traffic is to be distributed to each node-node pair. That is, it is up to a carrier to decide how best to efficiently route the traffic over its network.

Existing carrier networks are often built on circuit-switched core technologies (e.g., "IP-over-SONET"), which offer high reliability and fast protection schemes. However, when traffic demands change, networks built using these technologies are bandwidth inefficient. This can lead to a severe underutilization of network resources. Moderate degrees of traffic dynamics, such as diurnal demand variations, can potentially be handled by existing control plane techniques (e.g., the automatically switched optical network or "ASON"), but rapidly changing demand patterns cannot.

In contrast, packet-switched backbone networks (e.g., "IP-over-WDM") make use of statistical multiplexing which allows network resources to be better utilized without the need for a dynamic control plane. However, there are significant drawbacks that arise from using pure packet-switched architectures.

First, packet-switched networks examine and route traffic at each node along a source-destination path. For larger networks, this creates both a node scalability problem due to the difficulties in scaling packet routers, and cost concerns, because packet router ports are substantially more expensive than equivalent ports on a circuit-switched crossconnect.

Second, packet-based networks, by their very nature, use buffering at each node. This introduces packet loss and delay jitter, and makes quality-of-service (QoS) guarantees difficult to achieve.

Third, packet-switched networks do not meet reliability and restoration constraints that are typically met by circuit-switched networks.

## BRIEF DESCRIPTION OF THE DRAWINGS

FIGs. 1 (a) through 1 (d) depict network architectures.

FIG. 2 depicts exemplary networks referred to in this application.

FIG. 3 depicts a graph of cost ratios versus the number of intermediate routing nodes.

## SUMMARY OF THE INVENTION, INCLUDING EXAMPLES

The present invention provides for methods and devices that apply randomized load balancing across circuit-switched networks. The resulting networks offer SONET-grade reliability, yet promise lower deployment costs than conventional architectures designed for dynamic traffic variations. Furthermore, delay jitter and QoS guarantees are more likely to be met than in pure packet-switched architectures because all packets experience only a single stage of routing.

To determine network designs that are cost-effective, yet robust enough to adapt to rapid changes in traffic demand patterns, the present inventors compared the required network capacities and deployment costs of randomized load balancing with those of other data network architectures for dynamic traffic patterns obeying the *hose constraint.* In particular, the present inventors benchmarked randomized load balancing against traditional IP-over-SONET networks as well as IP-over-WDM networks.

For the sake of simplified network management, the present inventors required routings to be static in the sense that they can be determined ahead of time (so-called "oblivious routing"), thus maintaining the independence of source-destination paths from the varying traffic patterns to be routed. In particular, the present inventors studied shortest-path routing, routing on a VPN-Tree, and hub routing.

As a result, the present inventors recognized that a blend of hub routing with randomized load balancing yielded an oblivious routing strategy that combined the advantages of the two approaches and resulted in a highly attractive network architecture that was capable of operating effectively under fast-changing, traffic demand conditions.

## DETAILED DESCRIPTION OF THE INVENTION WITH EXAMPLES

Motivated by the desirability of carrying IP traffic over optical networks, the present inventors studied the problem of how a network could support (i.e., operate effectively under) uncertain or varying traffic patterns.

For present purposes a network circuit may be defined by two endnodes and some provisioned, dedicated capacity in a physical network. This capacity can be viewed as a point-to-point "pipe" that carries traffic unaffected between specified endnodes of the circuit. All traffic reaches its destination by following a sequence of such circuits or hops; the particular choice of a sequence of hops is referred to as "routing the traffic" or a "route." If traffic follows several hops, the intervening nodes, called routing nodes, must be capable of routing traffic onto the next hop towards its destination. For instance, this may be achieved in an IP network by examining each packet in between hops using an IP router.

Another type of traffic flow management used in networks is circuit provisioning. This refers to how individual circuits are set up within the physical network.

A network's architecture (e.g., design) is determined based on the collection of constraints that are used to determine how circuits can be implemented in the network and how these circuits may be employed to achieve end-to-end routing.

A first class of hop constraints controls the extent to which traffic may traverse multiple circuits, the three main categories being: single-hop routing (source-routing), dual-hop routing (routing at intermediate nodes) and multi-hop routing (hop-by-hop routing). A second class of circuit provisioning constraints determines how circuits are realized in the physical network. Typically, a circuit is identified by the presence of a "capacitated" path (i.e., a path having assigned capacities) between its endpoints. However, circuits implemented as fractional flows may also be identified as a circuit. This is sometimes called multi-path routing, and is implemented, for example, by a link capacity adjustment scheme.

A third class provisions circuits dynamically or statically.

Given one architecture, however, there still may exist several ways to design a network depending, for instance, on the choice of switching (node) equipment. The following are several concrete realizations of possible network architectures.

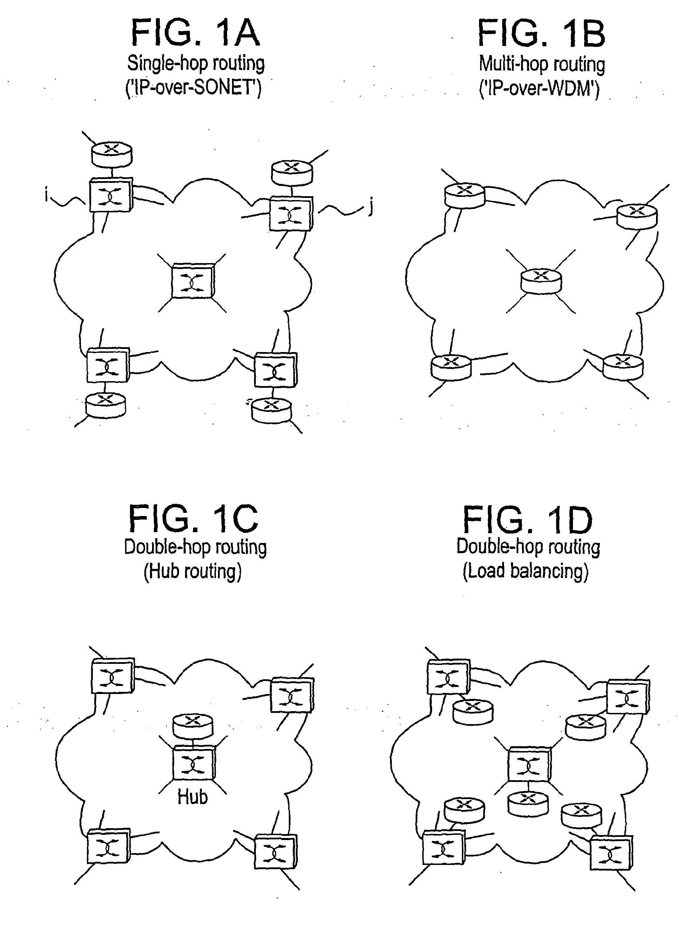

FIG. 1 (a) depicts a single-hop network architecture. Because it is source-routed, traffic in this type of network is placed onto pre-defined circuits by ingress routing nodes, e.g., IP routers, and traverses the network to its destination. If static circuit provisioning is employed, each node-node pair $(i, j)$ has to be connected by a circuit of capacity $(D_i, D_j)$ in order to support all traffic demands satisfying the *hose constraint,* where Di is the ingress/egress capacity of node i and $D_j$ is the ingress/egress capacity of node *j*. Because every circuit can handle an entire traffic demand originating at a node without re-configuration, no control plane is needed. That said, this architecture results in a vast over-provisioning of network resources if traffic patterns are allowed to change. This can be mitigated by dynamically provisioning circuits. Such provisioning involves the use of a dynamic control plane and setting up and tearing down circuits as needed to allow traffic to share network resources. However, the degree to which such provisioning is capable of adjusting to fast-changing traffic conditions is limited by the moderate speed of the control plane techniques presently available.

FIG. 1 (b) depicts a multi-hop network architecture where each node examines traffic entering it on a circuit, and places the traffic on a different circuit in accordance with a locally implemented routing strategy. The best-known example for this architecture is an IP network, where nodes are IP routers and circuits are point-to-point line systems (e.g:, using wavelength-division multiple access) between them. From a capacity analysis viewpoint, a multi-hop network architecture is equivalent to a single-hop architecture that uses a sufficiently fast control plane to support rapidly changing traffic demand conditions. In a multi-hop network, instead of using a globally acting control plane, statistical multiplexing through local routing at each node is used.

FIGs. 1 (c) and 1 (d) depict two cases of dual-hop network architectures where traffic is first sent to a set of intermediate routing nodes using preset circuits, irrespective of the traffic's final destination. Upon receiving the traffic, the intermediate node(s) perform local routing decisions and use a circuit-switched core to deliver traffic to its final destination. The network architecture shown in FIG. 1 (c) that uses just a single intermediate routing node is called a hub architecture. Although using a single hub often leads to the lowest overall network cost, it is not the most desirable architecture in practice, because a hub: (i) represents a single point of failure; and (ii) has to route an entire network's worth of traffic, which can quickly lead to network scalability problems. The network architecture shown in FIG. 1(d) first distributes incoming traffic across multiple (and in the extreme case among all) nodes for routing as inspired by Valiant's randomized load balancing strategy introduced in the context of parallel computing. This scheme has recently been considered as an architecture for high-capacity, internet packet routers, and has been proposed as an efficient way of designing backbone networks.

Network designers have traditionally adopted the view that an accurate estimate of point-to-point traffic demands should be made prior to laying out circuits. However, the increasing use and growing importance of flexible services (such as VPNs or remote storage/computing), has heightened interest in networks designed for situations where traffic patterns are either not well known *a priori* or change rapidly. In these settings, a network should be designed and dimensioned to support not just one traffic matrix, but a larger class of matrices determined by the particular application.

To design such a network, a robust optimization problem where, given a universe U of demand matrices (normally specified as a convex region), the goal is to design a network that supports every demand matrix in U at the lowest possible cost. The simplest form of this problem, recently shown to be NP-hard, is to allocate fractional link capacities that are sufficient to support every demand. In general, one must pay more to be able to support a whole class of demand matrices rather than just a single traffic pattern. This extra cost can be referred to a "robustness premium." In one embodiment of the present invention, algorithmic techniques may be used to some extent to control a robustness premium.

It should be noted that the capacity of links as well as nodal switching equipment within a network required to support one (or many) traffic matrices also depends on the functionality of the network equipment involved, because this in turn determines how traffic may be routed. For instance, routing of a demand matrix (i.e., distributed traffic to be routed) often uses information about the network topology and current utilization of network resources in determining a cost-effective routing. For present purposes, the discussion which follows will assume the use of oblivious (sometimes called static) routing strategies, that only depend on network topology, and do not make use of network utilization parameters or current traffic distributions. In this manner, routing paths may be calculated once, and ahead of time, independent of traffic pattern changes. This simplifies stable network operation.

Existing techniques that have focused on finding efficient demand-oblivious routings for robust network design have especially focused on choosing U to be the matrices arising from the *hose model.* These consist of all demand matrices having the following property: that the total demand into (or out of) a node is no more than a given bound on its ingress (or egress) capacity.

In the embodiments of the present invention discussed herein, it is assumed that the *hose model* with equal ingress applies. Thus, each node i has a bound $D_i$ which is the maximum egress and maximum ingress capacity at that node. Symmetric demands are not necessarily required. Because of this, the resulting class of matrices is $U=\{d_{ij}\geq 0: \sum_j d_{ij}\leq D_i, \sum_j d_{ji}\leq D_i, \forall i\}$.

One method for choosing an optimal tree subnetwork that supports a (undirected/bidirectional) VPN with *hose* constraints is as follows.

Given a fixed tree T, the capacities required to support VPN traffic can be computed. For each edge $e \in T$, consider the two trees obtained after deleting the edge e. The capacity of e must be at least the smaller of the total marginal capacities (i.e., the aggregate ingress/egress capacity) of all nodes in the two trees. The link-capacitated tree $\hat{T}$ resulting from these calculations is referred to as the VPN-Tree associated with T. These capacities are sufficient to route every *hose traffic demand* if a direct routing template (e.g., a plan that specifies how traffic demands can be routed) is used, where the demand between a node pair *i,j* is routed along the unique path between them in, *T.*

Another capacitated tree $\overline{T,v}$ associated with any such *T* and fixed node *v* can also be considered. Namely, $\overline{T,v}$ has sufficient edge capacities so that hub routing can be performed with v acting as the hub. These capacities are obtained by taking the edge loads obtained after each node *i* routes $2D_i$ traffic to node *v*. Note that in general $\overline{T,v}$ may have more capacity than $\hat{T}$, even in the case where *T* is a shortest path tree rooted at v.

It has been previously shown that an optimal VPN-Tree arises as a shortest path tree $T_r$ rooted at some node *r*. Moreover, for such a tree it has been shown that $\hat{T}_r$ is precisely the same as $\overline{T_r,r}$. One consequence of this is that an optimal VPN-Tree may be formed by solving for a shortest path tree $T_v$ from each node $v$ and taking the least expensive. A more important consequence is, that on such trees, there is enough capacity to use either the direct routing template or the hub routing template. This is significant because a hub routing template can be embedded using statically provisioned circuits between each node and the hub. This avoids over-provisioning within a dual-hop architecture.

Randomized load balancing is a two-step (dual-hop) routing scheme based on a statically provisioned circuit-switched core. In a first (load balancing) step, traffic originating at any node of an *N*-node network is uniformly distributed among all *N* nodes. (Load balancing across a smaller subset of $M \leq N$ nodes is discussed later.) For example, in the case of equal node ingress/egress capacities, each node distributes *1/N*-th of its traffic to each other node (and keeps *1/N*-th to itself). The traffic distribution in this first step is random in the sense that it does not make use of a demand matrix and does not require any routing decisions at the ingress. In a second step, each node performs local routing decisions on the traffic received during step 1, and statistically multiplexes traffic onto circuits leading to its final destination. Due to the random and uniform distribution of traffic in step 1, the traffic distribution in step 2 will also be uniform on average, with fluctuations being accommodated by buffering within routing nodes.

The link capacity required to perform the two steps may be analyzed as follows. For traffic marginals $D_i$ at nodes, the traffic distributed in each phase is the so-called *product multicommodity flow* induced by the $D_i$'s, i.e., the traffic between nodes i and j is $D_iD_j/\Sigma_l D_l$ (where $D_i$ is a summation of the capacities of nodes). Note that this *product multicommodity flow* is itself a permissible demand matrix for the *hose constraint.* Thus, it can be seen that the total link capacity required for load balancing is at most twice the optimal possible to support every legal demand matrix.

The benefits of randomized load balancing can be summarized as follows. First, because each node j receives a total of $\Sigma_i D_i D_j / (\Sigma_i D_i = D_j)$ from all $N$ nodes (including itself), the node routing capacity required for step 2 equals the total node ingress capacity. This corresponds to the routing capacity required for source-routed, circuit-switched architectures. Full support of dynamically changing demand patterns is maintained through local routing, and no global control plane is needed. Second, randomized load balancing performs strict dual-hop routing, i.e., all traffic is buffered only once (e.g., at the beginning of step 2). This reduces random buffering delays when compared to a multi-hop network architecture, which buffers traffic at each node. Third, the uniform nature of traffic in steps 1 and 2, regardless of the actual demand matrix to be routed, permits pre-allocation of static network circuits which dramatically simplifies network design.

One disadvantage of randomized load balancing (as with any other architecture employing multi-path routing templates) is that it requires traffic to be routed over paths with significant time-of-flight differences (delay spread), and the potential need for packet reordering. It should be noted, however, that these time-of-flight differences do not contribute to random delay jitter, but are fully predictable based on knowledge of the routing template, and can thus be counteracted by deterministic delays at the ingress, intermediate, or egress nodes. Also, the maximum propagation delay in randomized load balancing is about twice the time-of-flight of the longest path in the routing template, which restricts the geographic dimensions of load-balanced networks.

A second disadvantage of load balancing coincides with the main advantage of hub routing. It is easy to compare these two dual-hop architectures to see that the total link/node capacities needed for hub routing, when using an optimum hub (VPN-Tree), are always less than that for load balancing. To see this, notice that in step 1, traffic (as well as step 2 traffic) in load balancing can be written as a $1/N$ convex combination of $N$ capacitated trees arising from routing $D_i$ flow from each $i$ to the root of a shortest path tree $T_v$, for each node $v \in [1; N]$. Thus, the total capacity required by load balancing is a $1/N$ convex combination of the capacitated trees $\overline{T_v, v}$. In addition, because the capacities on any $\overline{T_v, v}$ are at least as large as those in $\hat{T}_v$, and the total capacity on any $\hat{T}_v$ is at least as large as the optimal VPN-Tree.

Thus, the load balancing capacity is a convex combination of trees each of whose capacity is at least as large as an optimal VPN-Tree.

As will be discussed in the following sections, a blend of the two dual-hop architectures can be considered as follows. As outlined above, load balancing can be informally viewed as hub routing with the "hub" being distributed across the network. Empirical analyses shows that the shortest-path trees associated with a number M<N of these hubs can be fairly close in cost to an optimal VPN-tree. Thus, load balancing across a subset of M nodes produces a solution whose total link capacity is close to that for the optimal VPN-tree, while still introducing resilience against node failures to which hub routing is susceptible. Apart from reducing network cost and relaxing failure and scalability concerns, randomized load balancing over an optimum subset of network nodes also reduces propagation delay and delay spread. This makes selective randomized load balancing a highly attractive alternative to conventional multi-hop architectures.

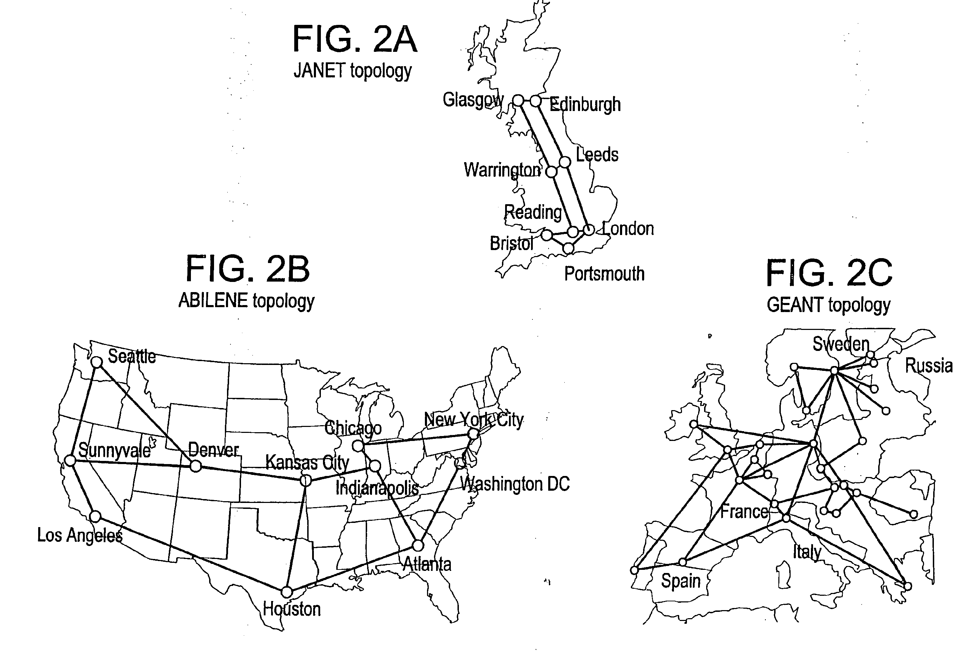

Next, the capacity requirements for the architectures and routing strategies introduced using the three exemplary networks of FIG. 2 are compared. Symmetric demands $(d_{ij} = d_{ji})$ and equal nodal ingress/egress traffic $(\Sigma_i d_{ij} = D/N)$ will be assumed in the following discussion. Demand patterns are allowed to vary under the *hose constraint,* and all architectures are capacitated to accommodate all legal permitted demand matrices without blocking.

First, all network architectures are compared to randomized load balancing across all $N$ network nodes, i.e., all traffic is distributed across the entire network, and every node acts as a local routing hub for $1/N$-th of the total network traffic. The results are summarized in Tables 1-3. These tables list the total required circuit-switching capacity (e.g., SONET crossconnects), the total packet-switching capacity (e.g., IP routers), and the transport capacities (e.g., a WDM line system) for different network architectures and shortest-path (SP) as well as VPN-Tree routing. The right-most columns give the overall network cost, normalized to the hub architecture using an optimum VPN-Tree. In order to arrive at the overall network cost, the following cost model will be assumed for commercially available networking hardware,

$$c_{IP-port} : c_{SONET-port} : c_{WDM/km} = 370 : 130 : 1, \tag{1}$$

where $c_{1P-port}$ is the cost of an IP router port, $c_{SONET-port}$ is the cost of a SONET crossconnect port, and $c_{WDM/km}$ is the cost of WDM transport per km of link distance all for the same data rate. Because all capacity numbers as well as cost numbers are presented, it is possible for the interested reader to plug in any other suitable cost ratio into those results.

## TABLE 1 JANET - OVERVIEW

| Architecture | Routing | Circuit-switching capacity | Packet-switching capacity | Transport capacity x km | Cost ratio (to hub) |
|---|---|---|---|---|---|
| 1. Single-hop (static) | SP | 120 | 16 | 11,104 | 3.12 |
|  | VPN | - | - | - | - |
| 2. Single-hop (dynamic) | SP | 42 | 16 | 3,437 | 1.42 |
|  | VPN | 32 | 16 | 2,302 | 1.29 |
| 3. Multi-hop | SP | - | 42 | 3,437 | 1.81 |
|  | VPN | - | 32 | 2,302 | 1.35 |
| 4. Load-balanced | SP | 44 | 8 | 2,776 | 1.14 |
|  | VPN | - | - | - | - |
| 5. Hub routing | SP | - | - | - | - |
|  | VPN | 40 | 8 | 2,302 | 1.00 |

## TABLE 2 ABILENE - OVERVIEW

| Architecture | Routing | Circuit-switching capacity | Packet-switching capacity | Transport capacity x km | Cost ratio (to hub) |
|---|---|---|---|---|---|
| 1. Single-hop (static) | SP | 287 | 22 | 165,478 | 6.07 |
|  | VPN | - | - | - | - |
| 2. Single-hop (dynamic) | SP | 71 | 22 | 37,019 | 1.57 |
|  | VPN | 51 | 22 | 22,621 | 1.08 |
| 3. Multi-hop | SP | - | 71 | 37,019 | 1.82 |
|  | VPN | - | 51 | 22,621 | 1.19 |
| 4. Load-balanced | SP | 72 | 11 | 30,087 | 1.27 |
|  | VPN | - | - | - | - |
| 5. Hub routing | SP | - | - | - | - |
|  | VPN | 62 | 11 | 22,621 | 1.00 |

## TABLE 3 GEANT - OVERVIEW

| Architecture | Routing | Circuit-switching capacity | Packet-switching capacity | Transport capacity x km | Cost ratio (to hub) |
|---|---|---|---|---|---|
| 1. Single-hop (static) | SP | 2,157 | 54 | 760,210 | 15.87 |
|  | VPN | - | - | - | - |
| 2. Single-hop (dynamic) | SP | 223 | 54 | 69,142 | 1.77 |
|  | VPN | 127 | 54 | 36,823 | 1.10 |
| 3. Multi-hop | SP | - | 223 | 69,142 | 2.27 |
|  | VPN | - | 127 | 36,823 | 1.25 |
| 4. Load-balanced | SP | 212 | 27 | 56,312 | 1.43 |
|  | VPN | - | - | - | - |
| 5. Hub routing | SP | - | - | - | - |

(continued)

| Architecture | Routing | Circuit-switching capacity | Packet-switching capacity | Transport capacity x km | Cost ratio (to hub) |
|---|---|---|---|---|---|
| | VPN | 154 | 27 | 36,823 | 1.00 |

For a randomized load-balanced architecture, it is further assumed that those line cards on SONET crossconnects handling nodal ingress/egress traffic are equipped with means for packet (or flow) splitting and re-sequencing. An additional cost of half the cost of a standard circuit-switched line card is allocated to this functionality; thus, the per-port cost of an ingress/egress line card in the load-balanced architecture amounts to 1.5 $C_{SONET\text{-}port}$ .

For a circuit-switched network with dynamic control plane architecture, no additional cost is allocated because highly dynamic control planes do not yet exist, and a meaningful quantification of their cost cannot be given.

As is evident from Tables 1-3, the static single-hop architecture, with its need for high over-provisioning, leads to overly expensive network costs. Neglecting the dynamic control plane architecture for its lack of availability, the most important contenders for dynamic networking are identified as:

• Multi-hop architecture using VPN-Tree routing;

• Load-balanced architecture using shortest-path routing; and

•Hub architecture using VPN-Tree routing.

Of these three architectures, the hub architecture (using an optimum network node as a routing hub) proves the least expensive on all networks, in agreement with the VPN-Tree routing strategy. However, all traffic is processed in a single routing node that has to be able to handle the entire network traffic D. Therefore, this architecture incorporates a single point of failure, and is thus often considered unreliable.

Depending on the network size, randomized load balancing appears to be the least expensive for networks of smaller geographic size across all network nodes (JANET), while multi-hop VPN-Tree routing performs better on larger networks (ABILENE and GEANT). This is expected from the discussion above (e.g., from Table 2), because randomized load balancing (in general) uses up more transport capacity than VPN-Tree based architectures, and, therefore, can only prove in if the cost of routing dominates the cost of transport. In fact, if the ABILENE topology is scaled from its average link distance of 1,317 km down to 831 km, and the GEANT topology from an average link distance of 797 km down to 319 km, randomized load balancing exhibits equal cost to multi-hop routing on a VPN-Tree. For comparison, JANET has an average link distance of 184 km, and randomized load balancing outperforms multi-hop IP routing up to an average link distance of 1,030 km on this topology.

Realizing that load balancing across an entire network only proves in for smaller networks, the inventors recognized that a new technique was needed. In one embodiment of the present invention, such a technique first identifies, and then carries out randomized load-balancing, across a subset of $M$ nodes of an $N$-node network (e.g., a large network). In order to identify the optimum M nodes that may act as intermediate routing nodes for randomized load-balancing, we note from above that: (i) randomized load balancing using $1 \leq M \leq N$ intermediate nodes can be viewed as a convex combination of M hub-routed networks, each processing $1/M$-th of the total network traffic D; and (ii) the cost of a hub-routed network depends on the choice of the node acting as the routing hub; i.e., choosing the optimum hub leads to a VPN-Tree routing strategy.

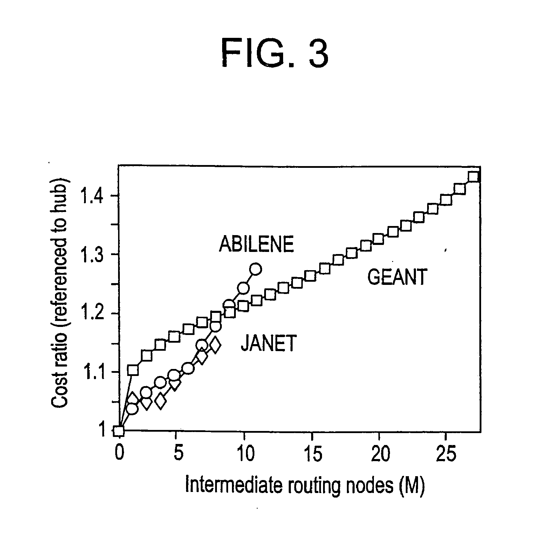

For the three network examples of FIG. 2, the cost of hub routing varies by 22%, 57%, and 90% for JANET, ABILENE, and GEANT, depending on the hub chosen. Implementing randomized load balancing based on M intermediate nodes that lead to the M lowest-cost hub architectures can therefore reduce the cost of a load-balanced network substantially below the multi-hop IP network using VPN-Tree routing. FIG. 3 visualizes this strategy. This figure shows the cost of a load-balanced network, normalized to hub routing, as a function of the M lowest-cost intermediate nodes, and taking into account the cost of traffic-splitting and re-sequencing hardware. Comparing the curves with the cost numbers for multi-hop VPN-Tree routing from Tables 1-3, it can be seen that load-balancing on the ABILENE network performs better than multi-hop VPN-Tree routing if $M \leq 8$ intermediate nodes are chosen. On the GEANT network, $M \leq 13$ intermediate nodes need to be chosen in order to compete against multi-hop VPN-Tree routing.

Not surprisingly, all hubs associated with the M lowest-cost trees are clustered together near the center of the network. The center is characterized by the notion that the aggregate traffic on all edges connected to the center is best possibly balanced, reflecting directly the construction of the VPN tree. Because all lowest-cost nodes are clustered together, the difference between the transport distances for any demand using either of these nodes as a routing hub is minimum. This mitigates one of the most severe drawbacks of randomized load balancing: the different delays of packets distributed to different intermediate nodes (delay spread) and the resulting need for packet re-sequencing. As an example, the worst-case delay spread on the JANET network is cut in half by using only 5 intermediate nodes instead of load balancing across the entire network. On the ABILENE network, the same reduction is obtained when using 6 routing nodes, and on the GEANT network when using 16 nodes. It follows then that a lowest cost, multi-hub architecture may be analogized to an architecture with the lowest-delay spread (e.g., the difference in delay between one routing path and another). In an alternative embodiment of the present invention, one or more nodes that are associated with the lowest-delay spread may be identified, and then used, to implement randomized load balancing.

Though the above discussion has focused on methods for carrying out the present invention, it should be realized that these methods may be carried out by one or more devices. For example, a network device or computer programmed to make use of a network planning tool or software application may be used to identify those nodes which can be used to carry out randomized load balancing.

The above discussion has attempted to set forth some examples of the present invention. However, it should be understood, that the true scope of the present invention is given by the claims which follow.

**Claims**

1.   A method for identifying one or more nodes of a network for randomized load balancing comprising:

     identifying one or more nodes that are associated with a lowest-cost multi-hub architecture.

2.   The method as in claim 1 wherein the identified nodes are clustered together near a center of the network.

3.   The method as in claim 1 wherein the identified nodes comprise intermediate routing nodes.

4.   The method as in claim 1 further comprising implementing randomized load balancing at a minimum number of the identified nodes.

5.   A method for identifying one or more nodes of a network for randomized load balancing comprising:

     identifying one or more nodes that are associated with a lowest delay-spread, multi-hub architecture.

6.   A method for cost-effectively routing traffic on a communication network that is subject to dynamically changing traffic conditions comprising:

     routing traffic to a plurality of intermediate nodes, each node further comprising a routing hub operable to perform randomized load balancing, wherein the routing of traffic achieves near-optimal usage of the network's resources.

7.   A device for identifying one or more nodes of a network for randomized load balancing operable to:

     identify one or more nodes that are associated with a lowest-cost, multi-hub architecture.

8.   The device as in claim 7 wherein the identified nodes are clustered together near a center of the network.

9.   The device as in claim 7 wherein the identified nodes comprise intermediate routing nodes.

10.  A device, for identifying one or more nodes of a network for randomized load balancing, operable to identify one or more nodes that are associated with a lowest delay-spread, multi-hub architecture.

# FIG. 1A
### Single-hop routing
### ('IP-over-SONET')

# FIG. 1B
### Multi-hop routing
### ('IP-over-WDM')

# FIG. 1C
### Double-hop routing
### (Hub routing)

# FIG. 1D
### Double-hop routing
### (Load balancing)

FIG. 2C
GEANT topology

FIG. 2A
JANET topology

FIG. 2B
ABILENE topology

# FIG. 3

**EP 1 705 848 A1**

**European Patent Office**

**EUROPEAN SEARCH REPORT**

Application Number

EP 06 25 1295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAK S ET AL: "Hierarchical load-balanced routing via bounded randomization" COMPUTER COMMUNICATIONS AND NETWORKS, 1999. PROCEEDINGS. EIGHT INTERNATIONAL CONFERENCE ON BOSTON, MA, USA 11-13 OCT. 1999, PISCATAWAY, NJ, USA,IEEE, US, 11 October 1999 (1999-10-11), pages 589-594, XP010359590 ISBN: 0-7803-5794-9 * abstract * * paragraph [0002] - paragraph [06.2]; figure 2 * | 1-10 | INV. H04L12/56 |
| A | US 2004/064583 A1 (DANI AMOD ET AL) 1 April 2004 (2004-04-01) * abstract * * paragraph [0013] - paragraph [0016]; claim 1 * | 1-10 | |
| A | HEUSSE M ET AL: "A new routing policy for load balancing in communication networks" COMPUTER SYSTEMS AND APPLICATIONS, ACS/IEEE INTERNATIONAL CONFERENCE ON. 2001 BEIRUT, LEBANON 25-29 JUNE 2001, LOS ALAMITOS, CA, USA,IEEE COMPUT. SOC, US, 25 June 2001 (2001-06-25), pages 267-272, XP010551222 ISBN: 0-7695-1165-1 * the whole document * | 1-10 | TECHNICAL FIELDS SEARCHED (IPC) H04L |

The present search report has been drawn up for all claims

| Place of search | Date of completion of the search | Examiner |
|---|---|---|
| Munich | 5 May 2006 | Fantacone, V |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

12

**EP 1 705 848 A1**

**ANNEX TO THE EUROPEAN SEARCH REPORT
ON EUROPEAN PATENT APPLICATION NO.**

EP 06 25 1295

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2006

| Patent document cited in search report | Publication date | Patent family member(s) | Publication date |
|---|---|---|---|
| US 2004064583 A1 | 01-04-2004 | NONE | |

EPO FORM P0459

For more details about this annex : see Official Journal of the European Patent Office, No. 12/82

13